# EUROPEAN PATENT APPLICATION

(11) **EP 1 276 307 A1**
(43) Date of publication of application: **15.01.2003**
(21) Application number: 01116573.5
(22) Date of filing: 09.07.2001
(51) Int. Cl.: H04M 19/04, H04M 1/00

(54) **Self modifying ringer melodies**

(71) Applicant: Sony International (Europe) GmbH, 10785 Berlin (DE)
(72) Inventor: Lechner, Thomas, 85609 Aschheim-Dornach (DE)
(74) Representative: Körber, Martin, Dipl.-Phys.

(57) **Abstract**

A mobile communication (100) device is proposed, comprising a storage unit (102) for storing sound-signal data, a processing unit (104) for processing sound-signal data, and a sound generating unit (106) for generating sound-signals based on sound-signal data retrieved from the storage unit (102) and processed by the processing unit (104), whereby each time the sound generating unit (106) is due to generate a sound signal, the processing unit (104) modifies at least one characteristic of the sound-signal data taken as the basis for the sound-signal. Preferably, the processing unit (104) automatically composes sound-signal data and stores the result in the storage unit (103). Further, a software program product is proposed, which is adapted to modify sound-signal data and to automatically compose sound-signal data, when being executed on the mobile communication device (100).

## Description

Modern mobile communication devices, especially mobile telephones allow a user to select a tune for use as a ringer tone or ringer melody, respectively, out of a given set of tunes stored in a memory of the device. The number of tunes provided by a communication device is usually limited to only a few up to some ten. Some models of mobile communication devices allow a user to extended the available set of tunes by i.e. downloading new ringer tunes being offered by specialised providers. Usually, a special service number has to be called for this purpose and following the instructions provided thereon, the desired tune is then sent to the mobile communication device in form of an SMS message. Communication devices adapted to access the Internet can alternatively download a ringer melody from a respective resource on the Internet.

But even if a communication device allows a user to expand his set of tunes in one of the described ways, a user might after a while get fed up with the selection and look for new tunes. Further, the tunes provided with the original communication device as well as those provided by one of the other resources are usually subject to temporary fashions. Using a special tune more or less exclusively has to be an exception that will never happen. More likely, when a user receives a call in a public area, where many people use mobile communication devices, several people may recognise a ringing tune as their own and try to answer their supposed call. For securely identifying a mobile communication device when ringing, each would have to be equipped with a unique tune as a ringing tone.

It is therefore an object of the present invention to provide a mobile communication device with individual tunes for ringer tones or ringer melodies respectively, and thus provide a virtual unlimited variety of ringer tones respectively ringer melodies.

This object is achieved by a mobile communication device according to claim 1. The mobile communication device according to the present invention comprises a storage unit for storing sound-signal data, a processing unit for processing sound-signal data, and a sound generating unit for generating sound-signals based on sound-signal data retrieved from the storage unit and processed by the processing unit, whereby each time the sound generating unit is due to generate a sound-signal, the processing unit modifies at least one characteristic of the sound-signal data taken as the basis for the sound-signal. The proposed method of slightly modifying a sound-signal by one or a few characteristics allows an automatic individualisation of a ringer tune. Because the tune is only modified in one or a few aspects at every ringing instance, a user is still capable of recognising the modified tune as his special tune. Although the original ringer tune will be modified completely in the course of many ringing instances, a user will still be able to recognise his tune, because the tune changes only gradually with every ringing instance.

The above object is further achieved by a software program product adapted to modify sound-signal data and to automatically compose sound-signal data according to the processes on the mobile communication device described above, when executed on the mobile communication device.

Further advantageous features are claimed in the respective sub-claims.

Advantageously, each time the processing unit modifies sound-signal data taken from the storage unit, it replaces the corresponding sound-signal data on the storage unit with the modified sound-signal data. Hereby, the set of tunes stored on the mobile communication device always provides the current tunes as they are to be put to use.

Preferably, the modified characteristic of the sound-signal data is a characteristic affecting the pitch of a note of the sound-signal hereby modifying intervals within the melody causing a gradual modification of the melody flow by slightly relocating the accents of the tune. Further, the characteristic of the sound-signal data is advantageously modified by a variation of a characteristic affecting the duration of a note of the sound-signal, hereby altering the inherent rhythm of the tune. Modifying a characteristic of the sound-signal data may further be implemented by modifying a characteristic affecting the time-signature which the sound-signal obeys. Hereby, the tempo of the tune is modified without affecting the pattern of the musical note pitch progression. According to an advantageous development, the characteristic of the sound-signal data to be modified and/or the type of modifying the characteristic is chosen on a random basis, so that a multitude of most different modifications contribute to the individualisation of an original tune.

The mobile communication device according to the present invention advantageously comprises a selecting unit for selecting sound-signal data from a plurality of sound-signal data stored in the storage unit. Thus, when a user is no longer satisfied with the actual modification of his tune or prefers a different tune data for a ringer tone with which to start a new individualisation, she or he can select new sound-signal data out from a set provided in the storage unit.

Preferably, the processing unit of the mobile communication device automatically composes sound-signal data and stores the result in the storage unit. This allows a user to start already with a tune hardly exists on any other mobile communication device. Further, composition rules may be stored in the storage unit and selected with the selecting unit to form an automatic design guideline for the processing unit when automatically composing sound-signal data. A user can therefore influence the outcomes of the automatic composition by setting certain preferences, which the final composition has to obey. Most preferably a set of composition rules is selected by means of the selecting unit employing a selection criteria denominating a music genre characteristic for the set of composition rules. This means, that composition rules are grouped to different sets with each set being representative for a certain music genre, and which can be selected by a user for instructing the processing unit to compose a tune contributing to the selected genre. The modifications applied to the sound-signal data advantageously meet the composition rules valid for this sound-signal data, so that no modification violates the music structure preferred by a user as it is defined by the valid composition rules.

The mobile communication device according to the present invention can i.e. be implemented as a mobile telephone, a personal digital assistant, a wireless or wired network computing device or the like.

In the following description, the present invention is explained in more detail in relation to the enclosed drawings, in which
Fig. 1 shows schematically a mobile communication device with sub-units according to the present invention, and
Fig. 2 shows an example of a storage unit according to the present invention containing sound-signal data and composition parameters,
Fig.3 shows functional details of the selecting unit in a flowchart, and
Fig.4 shows in a block diagram how the units of a mobile communication device according to the present invention co-operate.

The present invention is based on the experience, that a known composition can be recognised, even if the composition has undergone some modifications. Especially variations of a special theme allow an audience to enjoy a tremendous variety of one and the same keystone forming the inherent identity of a tune or theme respectively.

Like any other tune, also ringer tones and melodies show certain music structures which can be described by certain characteristics of the music piece. A tempo or time-signature of a tune, its mode or its pitch-range as well as e.g. the minimum note length used form i.e. such characteristics. Even the total length of time has to be considered as one of the characteristics of a tune. A further characteristics is e.g. a special waveform corresponding to a certain sound, whereby the waveform defines a particular timbre and spectral characteristic for a note, like e.g. the timbre and spectral characteristic corresponding to a certain instrument, a human voice, the sound of an animal or the like.

In the following, ringer tones and ringer melodies are referenced in their generalisation, a tune. It is to be noted, that what will described for tunes in general, is in the same way related to ringer tones/melodies as the practical implementation of a tune according to the present invention.

In principle, a tune can be described as a sequence of notes whereby a keystone-like sub-sequence being characteristic for the further course of the tune will be denoted as a theme. If no sub-sequence form a keystone, the whole tune will be addressed as a theme. The prominent basic features of every theme are the melodics characterised by the up- and down-movement of the notes and the rhythmics given by the different duration of each note.

A sequence of notes can be recognised even if some of its melodic or rhythmic features have been modified as long as the prominent structural characteristics of the theme are still recognisable. A modification of the pitch of a note e.g. melodically alters an interval but not necessarily the inherent identity of the theme. The same is true for changing the rhythmics of a theme by modifying the duration of a note within the theme. By applying only one or two modifications to the original theme, the substantial features defining the inherent identity of the original theme are being passed on to the successive theme as it is formed by the modifications. In other words, the resulting theme as it is achieved by modifying only certain characteristics of the original theme still carries in it the basic idea of the original theme and is therefore recognisable, but beyond that, the modification of the original theme further points into the direction of the development of its future variation.

Successively applying one modification after another to a theme, will probably change the theme's characteristic features completely so that its inherent identity will no longer be recognisable. A user, who started with a certain tune will recognise the tune from one ringing instance to the next as being played by his proper mobile communication device. If the tune does not change too quickly or significantly, the user usually recalls the tune by characteristics referenced by some of the more recent ringer instances, not necessarily only by the last ringer instance. Supported by this chain of a gradually changing tune, a user will recognise his proper tune even, if in the ongoing of many ringer events a current tune lost any resemblance with its initial origin. For a guaranty that hardly two similar melodies will exist on two different mobile communication devices at the same time and place, the characteristic to be modified is to be selected arbitrarily and its modification is to be carried out on the basis of random values.

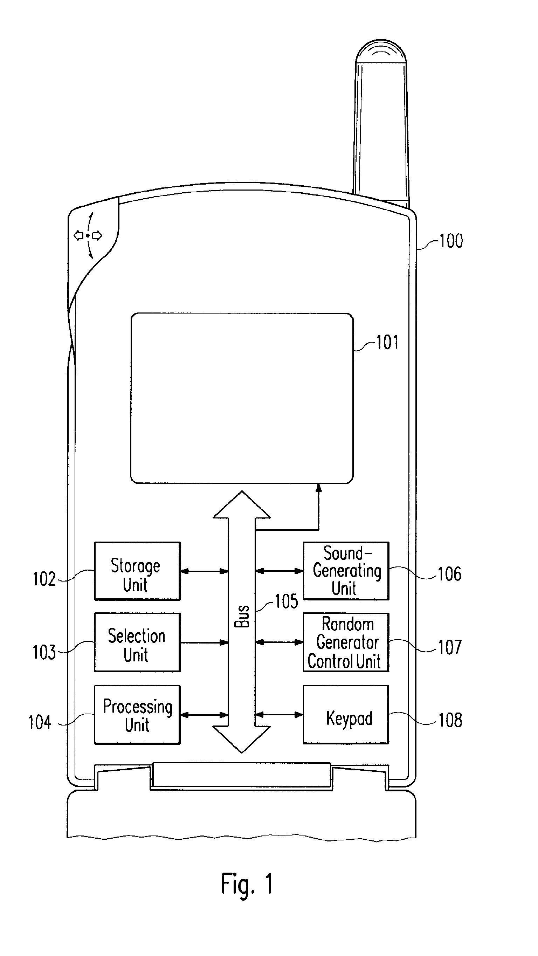

Fig. 1 gives an overview of the technical implementation of a mobile communication device 100 according to the present invention. It is to be noted that in Fig. 1 as well as in the following figures only elements necessary for explaining the present invention are shown, whereas other elements necessary for the normal operation of the mobile communication device 100 in a wireless or wired telecommunication system, such as an antenna, connector line, RF part, modulator, demodulator, coder, decoder, etc. are not shown for the sake of clarity.

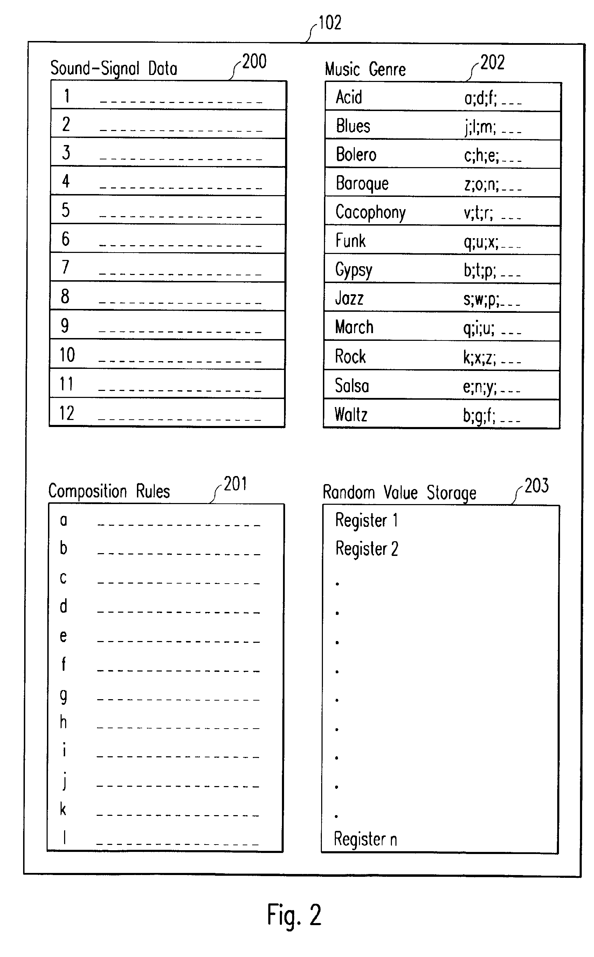

The mobile telephone 100 comprises a storage unit 102 for amongst other things a storage of sound-signal data representing tunes used for ringer tones and ringer melodies respectively. Beyond providing a repository 200 for sound-signal data the storage unit 102 further comprises repositories for composition rules 201 and music genres 202 as is indicated in Fig. 2. It is to be understood, that the storage unit is further used by other functional units of the mobile communication device 100 than the ones described within the context of the present invention. The storage unit may be implemented as a single monolithic storage device or may be built by a combination of one or more storage devices of non-volatile and even volatile memory units. The selection unit 103 along with the facilities of the mobile communication device for inputting data 108, usually a key pad, and a display device 101 allows a user to select his desired sound-signal data from the repository 200 or to select composition parameters for an automatic composition of a tune from either the repository 201 for composition rules or the repository 202 containing the data describing music genres. In the processing unit 104 the sound-signal data are processed such, that at least one characteristic of the current tune is modified when it is due to be replayed. The sound generating unit 106 transforms the processed sound-signal data created from the processing unit 104 into a ringer tone. The random generator control unit 107 provides randomly created information, which is used by the processing unit 104 to determine the type of modification to be applied to the sound-signal data. The different sub-units of the mobile communication device 100 communicate with each other via an internal bus 105.

Fig. 2 shows the repositories 200, 201, and 202 built within the storage unit 102. The repository 200 for sound-signal data contains a selection of sound-signal data files, each file representing a tune for a ringer melody. A user selects his desired tune by utilising the selection unit 103 displaying a menu on the display device 101 wherein the different sound-signal data are presented to him in form of identification codes as i.e. a classification number or letter, a control block, a key, or a short description or the like and are made selectable for a user by i.e. providing means for highlighting the respective identification code or activating an appropriate hook-box or the like.

The repository 201 for composition rules contains composition parameter data defining the characteristics of a music piece to be composed. These characteristics include music structure data like e.g. a measure, a time-signature, a tempo, a mode, a pitch-range and i.e. a minimum note length. The music structure data are organised in data files stored within the repository 201. Further, the tune to be composed may not exceed a certain length of time so that the total time of a tune or the number of sentences and phrases used in the tune will be limited hereby forming a further composition rule. Accessing and selecting composition rules from the repository 201 is done analogously to addressing and selecting sound-signal data from the repository 200.

The third repository 202 contains a collection of music genres which is organised in the same way than the repository 200 for sound-signal data and the repository 201 for composition rules. Every file representing a certain music genre contains a collection of composition rules, each of which rule is defined in one of the files stored in the composition rule repository 201. Each music genre file contains all the composition rules necessary to compose a tune belonging to the respective music genre. In the menu provided by the selection unit 103 the music genre files are preferably presented by an identification code in form of a key description like e.g. "Merengue", "Blues" "Gregorian" or any other.

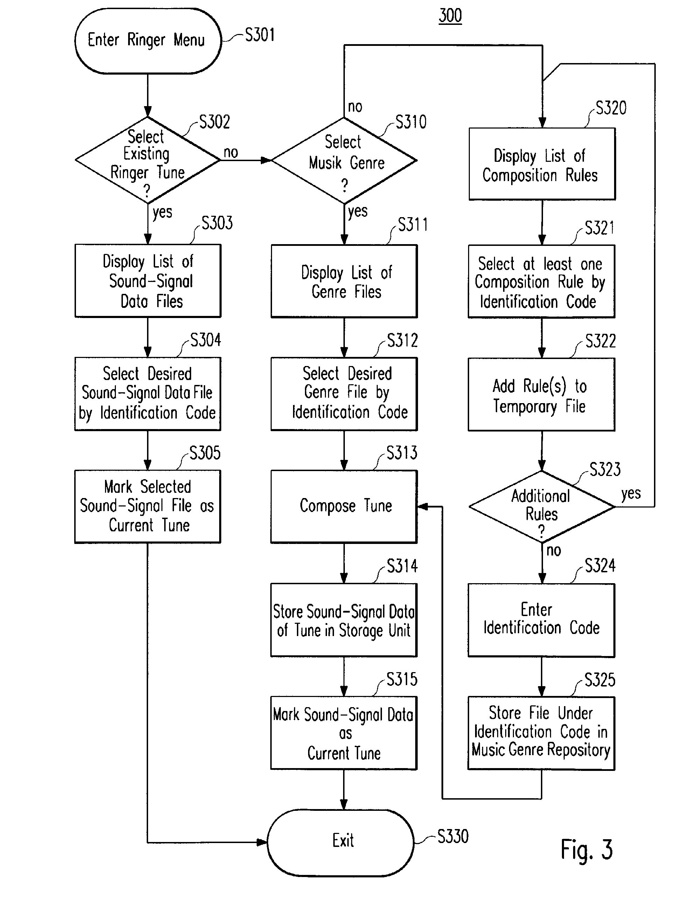

Fig. 3 shows in a flow chart the selection mechanism 300 as it is provided by the selection unit 103. For defining a certain tune as the current ringer tone of a mobile communication device 100, a user enters the ringer tone menu provided by the selection unit 103 in step S301. In the first mask of the menu, a user decides in step S302whether to select an already existing sound-signal data file for the current ringer tone or go for an automatic composition of a new tune. If the user decides to select an existing sound-signal data file, the selection unit 103 presents a display list of the sound-signal data files available in the next input mask in step S303. From this list the user next selects the desired sound-signal data file by selecting the respective identification code in step S304. Eventually the selected sound-signal data file is marked as the current tune in step S305 before finally the selection procedure is exited in step S330.

Assuming, that a user decides to go for an automatic composition of a new tune in step S302, he will be asked in the following menu mask of step S310 if the automatic composition should be based on one of the music genres already available in the music genre repository 202 or if he wants to combine composition rules for generating a new music genre of his own.

After deciding to select a music genre out of a given list, the selection unit presents in step S311 a display list of the genre files available within the music genre repository 202. In step S312 a user selects the desired genre file by activating the respective identification code representing the file. Next, in step S313 the processing unit 304 composes a new tune according to the composition rules provided by the selected music genre file. The resulting tune is then saved to the sound-signal data repository 200 of the storage unit 102 in step S314 as a new sound-signal data file, and in the next step S315 this file is marked as the current tune before the selection process is exited in step S330.

For a negative response to the question raised in step S310 a selection unit proceeds to the section, wherein a user can combine one or more composition rules according to his own taste for creating a new set of composition rules representing a new music genre. In step S320 the selection unit 103 displays a list of composition rules on the display device 101 for a user to select at least one of the rules to be used. After selecting the desired rule or rules in step S321 using the identification code denoting the respective rules, those rules are added to a temporary file in step S322. Next, in step S323 the user is asked if he wants to add additional rules. On positive response, steps S320 to S323 are repeated until the user selected all the composition rules defining the desired music genre of his choice. At this stage, the selection unit 103 asks the user to enter an identification code for the new genre file. In the next step S325 the previously temporary file is stored under the identification code in the music genre repository 202. The procedure then continues with step S313, wherein the processing unit 104 composes the tune according to the combined composition rules, stores the sound-signal data of the completed composition in the sound-signal data repository 200 of the storage unit 102 in step S314, marks this sound-signal file as the current tune in step S315 and finally exits the ringer tone menu in step S330.

Alternatively, a user may be allowed to enter composition rules of his own. Hereto, the selection unit 103 provides a menu controlled input scheme for entering composition rules defining certain music structure characteristics not already available in the repository 201 of the storage unit 102. Such composition rules may specify i.e. simple characteristics like a measure or a chord, but also more complex characteristics as e.g. defining modes for answering a theme in a sequence.

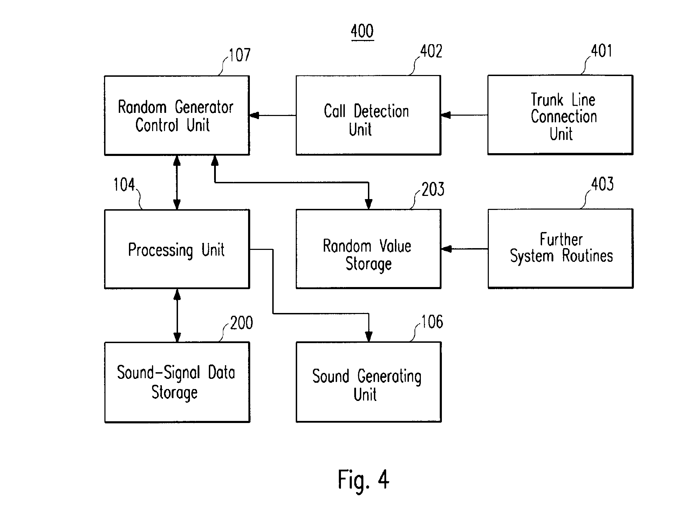

The block diagram 400 of Fig. 4 is a general drawing showing how the sub-units of a mobile communication device 100 according to the present invention co-operate to automatically modify a given tune used for a ringer tone in the mobile device. From the trunk line connection 401, the call detection unit 402 receives a signal for every call coming in and on that occasion the call detection unit 402 notifies the random generator control unit 107 of the event. Subsequently, the random generator control unit 107 retrieves values from the random value storage 203 based within the storage unit 102 on the basis of which values it decides what characteristic of the ringer tune is to be changed in which way. The result of the decision is forwarded to the processing unit which then carries out the respective modifications on the present tune retrieved from the sound-signal data storage 200. The modified tune is then passed on from the processing unit 104 to the sound generating unit 106 to produce the slightly modified ringer tone on the mobile communication device 100, and at the same time saved in the sound-signal data storage 200 replacing the original file of the original tune.

To make sure that the modifications applied to the ringer tone follow a random pattern, the random values used for deciding what characteristic has to be modified in which way are created arbitrarily and not influenced by the inner workings within the mobile communication device 100. Therefore, other system routines of the mobile communication device, which otherwise not contribute to the context of the present invention, frequently write values into the registers of the random value storage like e.g. call parameters or connections parameters or maybe just values created by a user working with the mobile communication device. To further enhance the randomness of the modification supplied to a ringer tone, the random generator may use a random number for arbitrarily selecting one of the random values containing registers within the random value storage 203.

Preferably, the processing unit 104 checks if the modification instructions received from the random generator control unit 107 violate one or more of the composition rules defining the music genre of the current tune before carrying out the modifications. If a violation of the composition rules has been detected, the modification rules are refused and new modification rules are requested from the random generator control unit 107.

According to an advantageous development, the units 103, 104, 106, and 107 being involved in the manipulation of sound-signal data are implemented by software modules executed on the mobile communication device 100. This allows to adapt the functional details of the individual sub-units to new technical requirements by simply exchanging the program code, which can be done i.e. via transmission of a corresponding message from a base station of a wireless terminal communication system or the like, providing a versatility not achievable by a all-hardware based implementation.

The present invention provides users of mobile communication devices with individual ringer tunes by gradually modifying the original ringer tune each time the tune is used and by varying the tune in such a way that the keystone identity is gradually relocated so that the tune will soon be discernible from practically every other ringer tune on any other mobile communication device. By additionally providing means for an automatic composing of new ringer tunes on the mobile communication device, the pool of individual ringer tunes can be extended from the very beginning.

## Claims

**1.** A mobile communication device (100) comprising
a storage unit (102) for storing sound-signal data,
a processing unit (104) for processing sound-signal data, and
a sound generating unit (106) for generating sound-signals based on sound-signal data retrieved from said storage unit (102) and processed by said processing unit (104),
**characterised in**
**that** each time said sound generating unit (106) is due to generate a sound-signal, said processing unit (104) modifies at least one characteristic of the sound-signal data taken as the basis for said sound-signal.

**2.** A mobile communication device according to claim 1,
**characterised in**
**that** each time said processing unit (104) modifies sound-signal data taken from said storage unit (102), it replaces the corresponding sound-signal data on said storage unit with the modified sound-signal data.

**3.** A mobile communication device according to claim for 2,
**characterised in**
**that** the modified characteristic of the sound-signal data is a characteristic affecting the pitch of a note of the sound-signal.

**4.** A mobile communication device according to claim 1, 2 or 3,
**characterised in**
**that** the modified characteristic of the sound-signal data is a characteristic affecting the duration of a note of the sound-signal.

**5.** A mobile communication device according to one of the claims 1 to 4,
**characterised in**
**that** the modified characteristic of the sound-signal data is a characteristic affecting the time-signature which the sound-signal obeys.

**6.** A mobile communication device according to one of the claims 1 to 5,
**characterised in**
**that** the characteristic to be modified and/or the type of modifying said characteristic is chosen on a random basis.

**7.** A mobile communication device according to one of the claims 1 to 6,
**characterised by**
a selecting unit (103) for selecting sound-signal data from a plurality of sound-signal data stored in said storage unit.

**8.** A mobile communication device according to one of the claims 1 to 7,
**characterised in**
**that** said processing unit (104) automatically composes sound-signal data and stores the result in said storage unit (102).

**9.** A mobile communication device according to claim 8,
**characterised in**
**that** composition rules are stored in said storage unit (102) and are selected to form an automatic design guideline for said processing unit (104) when automatically composing sound-signal data.

**10.** A mobile communication device according to claim 9,
**characterised in**
**that** a set of composition rules is selected by means of said selecting unit (103) employing a selection criterion denominating a music genre characteristic for said set of composition rules.

**10.** A mobile communication device according to claim 9 or 10,
**characterised in**
**that** the modifications applied to the sound-signal data meet the composition rules selected for said sound-signal data.

**11.** A software program product adapted to modify sound-signal data and to automatically compose sound-signal data according to one of the claims 1 to 10 when stored in a storage means and executed on a mobile communication device (100).
